# FASCICULE DE BREVET EUROPEEN

(11) **EP 3 464 655 B1**
(45) Date de publication et mention de la délivrance du brevet: **25.05.2022**
(21) Numéro de dépôt: 17735187.1
(22) Date de dépôt: 02.06.2017
(51) Int. Cl.: C22B 7/00, C22B 59/00

(54) **PROCÉDÉ D'EXTRACTION DE TERRES RARES CONTENUES DANS DES AIMANTS PERMANENTS**
VERFAHREN ZUR EXTRAKTION VON SELTENERDELEMENTEN AUS PERMANENTMAGNETEN
METHOD FOR EXTRACTING RARE EARTH ELEMENTS CONTAINED IN PERMANENT MAGNETS

(30) Priorité: 03.06.2016 FR 1655059
(43) Date de publication de la demande: 10.04.2019
(73) Titulaire: BRGM, 45060 Orléans Cedex 2 (FR)
(72) Inventeur: SERON, Alain, 45590 Saint Cyr En Val (FR); MENAD, Nour-Eddine, 45100 Orleans (FR); BREEZE, Dominique, 45160 Olivet (FR); GAMET, Marc, 45100 Orleans (FR)
(74) Mandataire: LLR
(86) Numéro de dépôt international: PCT/FR2017/051399
(87) Numéro de publication internationale: WO 2017/207947

(56) Documents cités:
- FR-A1- 2 997 095
- Ho-Sung Yoon, Chul-Joo Kim, Joon-Soo Kim: "Recovery of Neodymium from NdFeB Oxidation-Roasted Scrap by Acetic Acid Leaching | Korea Science", J. of Korean Inst. of Resources recycling , vol. 13, no. 6 21 septembre 2004 (2004-09-21), pages 43-48, XP055329109, Extrait de l'Internet: URL:http://koreascience.or.kr/article/Arti cleFullRecord.jsp?cn=RSOCB3_2004_v13n6_43 [extrait le 2016-12-14]
- TOM VANDER HOOGERSTRAETE ET AL: "From NdFeB magnets towards the rare-earth oxides: a recycling process consuming only oxalic acid", RSC ADV., vol. 4, no. 109, 1 janvier 2014 (2014-01-01), pages 64099-64111, XP055328177, DOI: 10.1039/C4RA13787F

## Description

### 1 - Domaine technique de l'invention

La présente invention concerne un procédé d'extraction des terres rares contenues dans des aimants permanents provenant notamment des déchets d'équipements électriques et électroniques (D3E ou DEEE).

### 2 - Etat de l'art

Les DEEE forment le flux de déchets qui connaît actuellement la plus forte croissance, entre 2 et 3% chaque année. Ils présentent un fort potentiel de recyclage des matériaux qui les composent (métaux ferreux et non ferreux, métaux rares, verres, plastiques...). Ces enjeux économiques et environnementaux ont justifié la mise en place d'une filière de gestion spécifique de ces déchets, fondée sur le principe de la responsabilité élargie des producteurs (REP) de ces équipements. Ainsi la filière de collecte et de recyclage des DEEE est opérationnelle en France depuis le 22 Juillet 2005 pour les DEEE professionnels, et depuis le 15 Novembre 2006 pour les DEEE ménagers.

Pour autant certains composants sont mal ou pas recyclés. C'est le cas des aimants permanents à base de terres rares présents dans de nombreux objets du quotidien, tels que les ordinateurs, les téléviseurs ou les téléphones portables. Ces aimants permanents contiennent principalement du néodyme (Nd) allié au fer et au bore. Ils peuvent aussi comprendre du dysprosium (Dy) et du praséodyme (Pr).

De nombreuses méthodes ont déjà été proposées pour le recyclage des terres rares présentes dans des produits usagés, aimantés ou non. Toutefois, ces modes de recyclage ne donnent pas totalement satisfaction.

Les documents suivants décrivent la récupération des terres rares contenues dans les aimants permanents par chloration ou fluoration directe.

Le document CN101817547 propose de récupérer les terres rares d'un aimant via un procédé consistant à broyer l'aimant, à ajouter à la poudre obtenue du carbone puis à mettre ce mélange au contact d'un flux de chlore gazeux afin de produire des chlorures de terres rares et un chlorure de fer volatil. Les terres rares sont ensuite purifiées par précipitation oxalique.

Le document WO 2009/119720 utilise un procédé par immersion de l'alliage de terres rares dans un sel fondu halogéné à haute température qui permet d'extraire les terres rares sous forme d'halogénures de terres rares gazeux.

Ces deux techniques sont peu attractives compte tenu de la dangerosité de la circulation de gaz chloré ou fluoré.

Un second mode de recyclage met en œuvre un procédé par fusion.

Le document JP 2001-335852 repose sur le mélange de poudre d'aimants et d'un agent fluoré tel que le NH4F. L'ensemble est chauffé jusqu'à sa fusion. Les terres rares se retrouvent après refroidissement en mélange avec un laitier et peuvent être séparées par différence de densité.

Le document JP 2010-199110 utilise le même procédé de recyclage par chauffage jusqu'à fusion et séparation des fractions fondue et non fondue. Cette dernière fraction est riche en alliage Nd.

L'inconvénient majeur de ce type de procédé par fusion est lié à la dépense énergétique qui induit un coût élevé.

Le troisième mode de recyclage repose sur une extraction de terres rares par un métal fondu.

A titre d'exemple, le procédé du document WO 2007/119846 utilise l'oxydation des aimants puis la mise en contact avec de l'aluminium fondu conduisant à la formation d'un oxyde de terres rares en mélange avec un laitier et un alliage Fe-B qui doivent être séparés ultérieurement. Dans ce cas, la difficulté réside dans la gestion délicate de la réaction d'aluminothermie.

Un autre procédé met pour sa part à profit la forte affinité du magnésium fondu avec le néodyme, contrairement au fer. Les limites ici sont liées à la gestion d'un métal à l'état gazeux, et à la dépense énergétique qui est associée au procédé.

Dans le cadre du recyclage hydrométallurgique, le procédé développé dans le document US5362459 consiste à dissoudre un laitier provenant de la préparation d'alliage NdFeB par électrolyse dans un bain d'acide sulfamique, le bain étant ensuite mélangé avec de l'acide fluorhydrique pour précipiter du fluorure de néodyme.

Ce mode de traitement n'est pas adapté aux formes massives d'aimants et est très coûteux d'un point de vue énergétique.

On connaît déjà du document Ho-Sung Yoon et al, J. of Korean Inst. Of Resources recycling (2004) vol. 13, n° 6, p. 43-48, un procécé d'extraction des terres rares contenues dans un aimant permanent. Ce procédé ne comporte cependant pas d'étape de séparation vis-à-vis du fer.

D'autres documents pertinents sont Tom Vander-Hoogerstraete et al, RSC ADV (2014) vol. 4, n° 109, p. 64099-64111 et FR2997095 A1.

### Description de l'invention

L'invention a pour but de proposer un procédé alternatif ne présentant pas tout ou partie de ces inconvénients et permettant l'extraction de terres rares contenues dans des aimants permanents à terres rares, plus particulièrement de type NdFeB, dopés ou pas, c'est-à-dire additionnés, ou non, avec d'autres terres rares comme le Dy et / ou le Pr.

Les aimants sont caractérisés par le fait qu'ils possèdent des moments magnétiques.

Les aimants permanents sont des aimants qui présentent une rémanence ou persistance de leurs moments magnétiques, c'est-à-dire qu'ils conservent leurs propriétés magnétiques après la suppression d'un champ magnétisant. Un aimant permanent est généralement constitué d'un matériau magnétique dur, fabriqué, dont le champ rémanent et l'excitation coercitive sont grands. Les aimants permanents contiennent presque toujours des atomes d'au moins un des éléments chimiques suivants : fer, cobalt ou nickel, ou de la famille des lanthanides (terres rares). Les aimants synthétiques utilisés dans la présente invention sont produits par frittage d'un alliage contenant des poudres de terres rares qui forme alors un alliage polarisé sous un champ intense d'un électroaimant. De tels matériaux sont particulièrement utilisés dans le procédé selon l'invention.

Les aimants de type NdFeB sont également connus sous les noms d'aimants au néodyme. Ils sont composés en majorité d'un alliage de néodyme, de fer et de bore (Nd₂Fe₁₄B) permettant de former un système cristallin tétragonal.

Les aimants permanents de type NdFeB, lorsqu'utilisés dans le procédé selon l'invention peuvent être contenus dans des déchets industriels provenant par exemple du recyclage des disques durs d'unités centrales de type PC ou d'ordinateurs portables, des haut-parleurs, par exemple de téléphones portables ou ordinateurs, de petits moteurs électriques ou encore être composés de déchets de production d'aimants permanents. De tels aimants sont souvent entourés d'une couche de nickel. Néanmoins, leur revêtement peut être à base d'autres métaux tels que le cobalt, un alliage cuivre-cobalt, du zinc, ... Le même procédé est applicable à des aimants revêtus d'époxyde.

A cet effet, l'invention a pour objet un procédé d'extraction de terres rares contenues dans un aimant permanent, plus particulièrement de type NdFeB additionné ou pas de terres rares, comprenant les étapes de :
a) traitement thermique de l'aimant permanent à une température supérieure ou égale à sa température de Curie,
b) broyage de l'aimant issu de l'étape de traitement thermique, les particules issues du broyage étant classifiées pour sélectionner les particules présentant pour 80 à 90 % d'entre elles une taille inférieure à 2 mm,
c) traitement sous agitation des particules sélectionnées à l'issue de l'étape de broyage par une solution contenant un acide organique,
d) séparation de la phase liquide d'une éventuelle phase solide à l'issue du traitement par la solution contenant l'acide.

Avantageusement la phase liquide contient plus de 70% en masse des terres rares de l'aimant permanent ayant subi les étapes précédentes du procédé.

Le traitement au-delà de la température de Curie, c'est-à-dire à une température généralement supérieure à 300°C, préférentiellementcomprise entre 300 et 400°C, et de préférence aux alentours de 350°C, permet la désaimantation définitive des aimants, ce qui est avantageux pour la suite du procédé qui n'est pas perturbée par les propriétés magnétiques des aimants.

De façon préférentielle, le traitement thermique est effectué à une température inférieure à 600°C. De préférence, ce traitement thermique a uniquement pour but la désaimantation. Il n'a pas pour objet l'amélioration de la dissolution des métaux dans la solution contenant l'acide organique.

Le traitement thermique est préférentiellement réalisé pendant une durée d'au moins 10 minutes, et préférentiellement comprise entre 10 et 40 minutes.

Par broyage, on entend la fragmentation de l'aimant en le soumettant à un choc ou à une pression.

L'étape de broyage permet d'obtenir de la poudre d'aimant dont la granulométrie est sélectionnée de manière à favoriser l'attaque acide et la dissolution des terres rares. En effet, la taille des particules influe sur les propriétés physico-chimiques du substrat. Plus le produit est fin, plus la dissolution est rapide, mais la manipulation de poudres trop fines peuvent dans certains cas présenter des désavantages à diverses étapes du procédé.

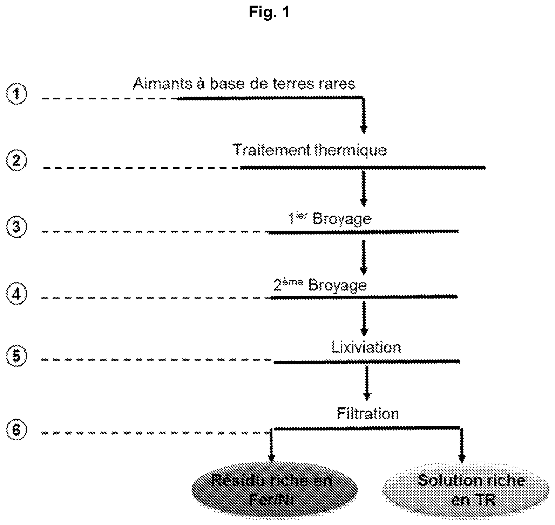

De façon préférentielle, le broyage est un broyage ménagé, par exemple décomposé en au moins deux étapes de broyage où les rejets du premier broyage font l'objet d'un second broyage tel que décrit à la figure 1 :
- une première étape à l'issue de laquelle des particules d'aimant issues du broyage sont classifiées afin de sélectionner des particules dont la taille est inférieure à 4 ou 2 mm,
- une deuxième étape de broyage des particules non sélectionnées à l'issue de la première étape de broyage, les particules issues du second broyage étant classifiées pour sélectionner les particules présentant pour 80 à 90 % d'entre elles une taille inférieure à 2 mm.

Contrairement au broyage poussé, qui est excessif parce qu'il produit plus de particules ultrafines qu'il ne devrait ou parce qu'il donne un produit généralement plus fin que le produit recherché, le broyage ménagé est pratiqué de manière à obtenir précisément la granulométrie recherchée.

Le broyage ménagé en plusieurs étapes évite la production de particules fines qui se volatilisent, ce qui engendre une perte de matériau. Par ailleurs, il implique une dépense énergétique moins importante que le broyage poussé.

Le broyage ménagé peut être effectué en une seule étape.

De façon préférentielle, la sélection des particules est effectuée par tamisage.

Des étapes complémentaires de tamisage peuvent être ajoutées au procédé, le refus de tamisage (particules non sélectionnées à l'issue du broyage) étant à nouveau broyé jusqu'à ce que la totalité de l'aimant ait atteint la granulométrie requise pour l'étape suivante du procédé.

De façon préférentielle, les particules sur lesquelles est pratiquée l'attaque acide ont une taille inférieure à 2 mm pour 80 % d'entre elles, et préférentiellement pour 90 % d'entre elles.

De façon préférentielle, les particules sur lesquelles est pratiquée l'attaque acide ont une taille supérieure à 0,2 mm pour 80 % d'entre elles, et préférentiellement pour 90 % d'entre elles.

De façon encore plus préférentielle, les particules sur lesquelles est pratiquée l'attaque acide ont une taille supérieure à 0,5 mm. Ces granulométries sont en adéquation avec un procédé industriel car elles demandent une dépense énergétique limitée lors de leur production.

Avantageusement, le broyage est réalisé à l'aide d'un déchiqueteur, par exemple un broyeur à couteaux. La classification est effectuée à l'aide de tamis selon les méthodes standard.

Selon un mode de réalisation alternatif de l'invention, les étapes a) de traitement thermiques et b) de broyage peuvent être substituées par l'apport de particules désaimantées présentant pour 80 à 90 % d'entre elles une taille inférieure à 2 mm. De telles particules peuvent être issues d'aimants désaimantés broyés.

Le traitement des particules par la solution contenant un acide organique, ou attaque acide, permet de dissoudre les constituants de l'aimant et en particulier les terres rares dans la solution. Il peut également conduire à une dissolution plus ou moins partielle d'un revêtement présent à la surface de l'aimant. Dans le cas des revêtements à base de nickel, la dissolution est très limitée ce qui permet de le séparer, sous la forme d'un résidu solide de nickel, à la fin du procédé.

Cette attaque est effectuée par une solution d'acide organique, en particulier des acides carboxyliques en C1 - C10, de préférence en C1 - C5 ayant au moins une ou deux fonctions (ou radicaux) carboxyles. Par exemple de l'acide acétique, de l'acide oxalique ou de l'acide citrique, ou un mélange de ceux-ci sont des acides qui sont particulièrement avantageux à utiliser dans le procédé selon l'invention.

Le solvant de l'acide est généralement de l'eau.

De préférence la solution acide présente une concentration allant de 5 à 30 % en volume, et par exemple une concentration d'environ 10 %. Pour de l'acide acétique, cela correspond à une solution allant de 0,8 à 2.4 M. De façon préférentielle, la solution présente une concentration en acide acétique supérieure à 1 M, et de préférence de 1,6 M.

Ceci peut conduire à des mises en solution totale ou partielle des poudres d'aimant et à un partage intéressant entre solide résiduel et solution des différents éléments constitutifs des aimants permanents.

De préférence, lors de l'attaque acide, la poudre d'aimant correspondant à des particules sélectionnées à l'issue des étapes de traitement thermique et de broyage est ajoutée à la solution acide à raison de 150 g de poudre par litre de solution d'acide.

L'attaque acide est de préférence effectuée pendant une durée minimum de 1 heure, préférentiellement inférieure à 24 heures, plus préférentiellement allant de 100 à 550 minutes, par exemple d'environ 420 minutes.

De préférence, l'attaque acide (ou lixiviation) est effectuée à une température allant de 10 à 50°C, plus préférentiellement de 10 à 30°C,et encore plus préférentiellement à température ambiante, c'est-à-dire 20°C. Elle peut être effectuée sous atmosphère statique d'air ou d'azote, sous débit d'air ou sous débit d'azote. Préférentiellement, l'attaque acide amène le pH de la solution à un pH inférieur à 2. La quantité d'acide à ajouter est donc avantageusement une quantité d'acide permettant d'atteindre un tel pH.

Une valeur de pH basse augmente la cinétique de la dissolution.

La phase liquide contenant les terres rares, est ensuite séparée de la phase solide si tous les composés de la poudre ne se sont pas dissous. C'est par exemple le cas pour des aimants entourés d'une couche de nickel, particulièrement en présence d'une solution d'acide acétique. Dans ce cas le nickel, associé ou non au fer, reste sous forme solide et peut donc être récupéré par simple séparation solide/liquide.

Cette séparation solide/liquide peut être effectuée par toute méthode connue telle que la centrifugation, (par exemple à 3500 tr/min pendant 10 minutes), la filtration ou la décantation.

A l'issue de l'attaque acide, au moins une partie de la fraction ferreuse des aimants est passée en solution.

De préférence, le fer est séparé des terres rares, éventuellement lors d'une étape supplémentaire. Dans cette étape, le fer peut être précipité tandis que les terres rares restent, au moins en partie, dans la phase liquide.

Pour ce faire, de l'oxygène peut être introduit dans la solution par exemple par bullage ou brassage avec un gaz contenant de l'oxygène, tel que l'air, ou de l'oxygène pur. Alternativement, on peut également envisager l'utilisation d'eau oxygénée (H2O₂). Ce mélange favorise l'oxydation du fer du degré d'oxydation 2 au degré 3 et donc la précipitation de composés oxydes ou oxy-hydroxydes de fer III à bas pH, (c'est-à-dire à un pH généralement inférieur à 4). Le pH est de préférence mesuré à l'aide d'un pHmètre de résolution de mesure du pH de 0,01 unité, de résolution de mesure du potentiel de 1 mV et de résolution de mesure de la température de 0,1 °C, tel que le pHmètre Heitolab P310 de Heito. De façon préférentielle pour la mesure du pH, l'électrode est de marque Heito. Le fer est ainsi précipité et peut être séparé des terres rares par une étape de séparation de phases comme une filtration, une centrifugation ou une décantation. Avantageusement le pH est maintenu inférieur à 4 par l'ajout d'acide. De préférence, la solution est maintenue à un pH permettant la précipitation sélective du fer. Par exemple le pH est choisi entre 3 et 4.

Alternativement ou additionnellement, les inventeurs ont montré que la séparation du fer est obtenue par mise en contact de la solution riche en terres rares et en fer avec un matériau d'origine biologique tel que de la poudre de coquilles d'huître ou de la poudre d'écorces de pin. De nombreux autres matériaux biologiques sont connus pour influer sur le comportement des métaux en solution. C'est par exemple le cas des algues séchées. Cependant, la poudre de coquilles d'huître et la poudre d'écorces de pin ont montré une efficacité particulièrement surprenante pour l'abattement du fer par rapport aux terres rares. Au contraire, la poudre d'os calcinée tend à piéger l'ensemble des métaux y compris le fer et les terres rares. Ces matériaux biologiques sont avantageusement utilisés sous forme de poudre fine. Une telle poudre peut comprendre essentiellement des particules présentant une taille de 0,5 à 5 mm, de préférence de 0,6 à 2 mm, par exemple 1,25 mm.

L'étape de séparation du fer peut être effectuée préalablement à la séparation liquide / solide décrite à l'étape d) du procédé, ou bien à la suite de la séparation liquide / solide et être suivie par une deuxième étape de séparation liquide / solide.

De façon préférentielle, les terres rares extraites par ce procédé sont choisies parmi le Nd, le Dy et le Pr, et un mélange de celles-ci.

De façon optionnelle, le procédé d'extraction est effectué sur des aimants revêtus, par exemple par du nickel, du cobalt, un alliage cuivre-cobalt, du zinc, de l'époxyde ou d'un mélange de ces composés.

L'invention a également pour objet un procédé d'extraction de terres rares contenues dans des particules désaimantées provenant d'un aimant permanent, plus particulièrement de type NdFeB, additionné ou pas d'autres terres rares, le procédé comprenant les étapes de :
- traitement sous agitation des particules par une solution contenant un acide organique,
- séparation de la phase liquide d'une éventuelle phase solide à l'issue du traitement par la solution contenant l'acide, la phase liquide contenant avantageusement plus de 70% des terres rares de l'aimant permanent ayant subi les étapes précédentes du procédé.

Les conditions et étapes de désaimantation, d'obtention des particules, par exemple par broyage, la taille des particules, le traitement par une solution acide et les étapes de séparation aboutissant à l'extraction des terres rares peuvent avantageusement être telles que celles décrites ci-avant. De même les étapes d'extraction du fer peuvent également être appliquées à ce procédé.

L'invention porte également sur un procédé de recyclage incorporant un procédé d'extraction selon l'invention où l'aimant permanent provient de déchets industriels.

L'invention porte également sur les produits obtenus directement du procédé selon l'invention et leur utilisation subséquente notamment dans le domaine de l'électronique.

Un autre objet de l'invention est un procédé tel que décrit ci-dessus ne comprenant pas d'étapes chimiques réactionnelles entre les étapes d'apport de particules d'aimants désaimantés et broyés et l'étape d'attaque acide.

Un autre objet de l'invention est un procédé tels que décrit ci-dessus ne comprenant pas d'étapes chimiques réactionnelles entre les étapes d'attaque acide et de séparation solide/liquide et/ou de précipitation et/ou de fixation du fer.

Un autre objet de l'invention est un procédé tel que décrit à la Figure 1. Ce procédé peut incorporer une ou plusieurs des caractéristiques décrites ci-dessus.

L'invention sera mieux comprise à la lecture des exemples, comprenant des figures, qui vont suivre, qui sont donnés uniquement à titre d'exemple.

### Description des figures :

La figure 1 schématise le procédé d'extraction selon un mode de réalisation de l'invention des terres rares présentes dans des aimants permanents, similaire aux modes de réalisation exemplifiés aux exemples 2 à 4.
La figure 2a est une photographie prise au microscope électronique à balayage (MEB) d'un aimant permanent selon l'exemple témoin 1.
Les figures 2b et 2c regroupent les résultats d'analyse chimique qualitative par microscopie électronique à balayage - spectroscopie à dispersion d'énergie (MEB EDS) réalisées sur l'aimant de l'exemple 1, lors de sa visualisation au MEB.
La figure 3 présente les taux de dissolution au cours du temps du Fe, Nd, Dy et Ni lors de l'étape de dissolution par attaque acide d'un procédé selon l'invention objet de l'exemple 2.
La figure 4 présente les taux de dissolution selon le temps du Fe, Nd et Dy lors de l'étape de précipitation du fer d'un procédé selon l'invention objet de l'exemple 3.
La figure 5 présente les taux de dissolution selon le temps du Fe, Nd et Dy lors de l'étape de précipitation du fer d'un procédé selon l'invention objet de l'exemple 4.

### Exemple 1 (Témoin) : Analyse d'un aimant permanent sans revêtement

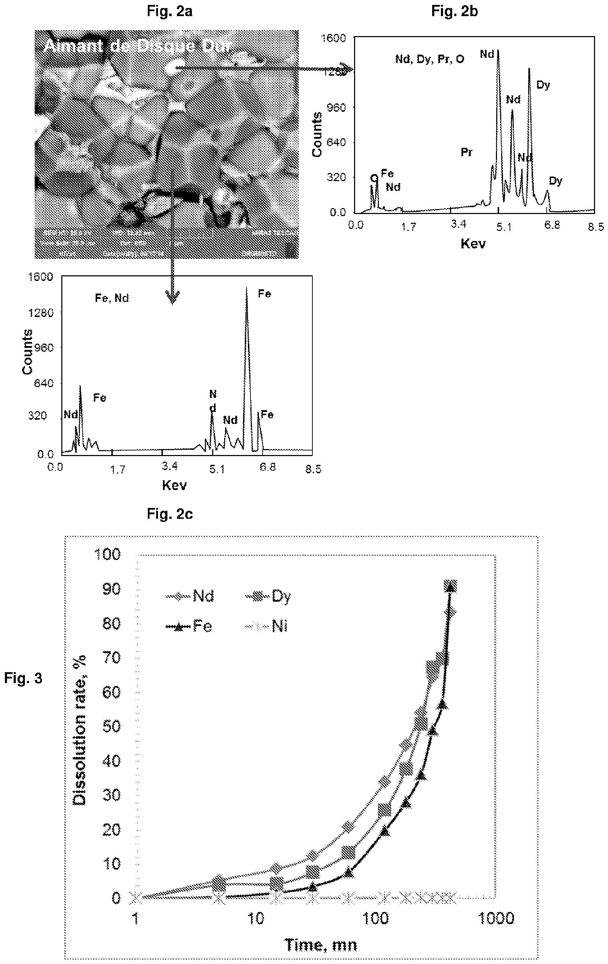

Les figures 2a à 2c montrent les résultats de caractérisation par imagerie MEB d'un aimant permanent de type NdFeB, sans revêtement, qui n'a pas été soumis au procédé selon l'invention. L'analyse permet de mettre en évidence la structure granulaire de ces aimants constitués de cristaux de phase Nd₂Fe₁₄B frittés (flèche basse vers figure 2c) en présence d'une phase inter-granulaire riche en terres rares (flèche haute vers figure 2b). Dans l'analyse par MEB EDS d'un cristal de phase Nd₂Fe₁₄B fritté (Figure 2c), on identifie la raie caractéristique du Fe, qui est majoritaire, et du Nd qui est bien représenté. Dans la phase inter-granulaire riche en terres rares (Figure 2b), on identifie en particulier les raies d'émission du Nd, du Pr et du Dy.

### Exemple 2 : Extraction des terres rares d'aimants permanents à revêtement de nickel

Des échantillons d'aimants permanents issus d'ordinateurs portables ou fixes (étape 1 du procédé schématisé en Figure 1) de type aimants Néodyme-Fer-Bore (NdFeB) à revêtement de nickel ont été utilisés. La composition chimique de l'alliage NdFeB composant le cœur des aimants est la suivante : Fer 61,3%, Néodyme 35%, Dysprosium 1,8% et Bore 1,4%.

Ces aimants ont été traités thermiquement pendant 20 minutes à une température de 350°C dans un four à moufle, c'est-à-dire au-ddà de leur température de Curie, en vue de les désaimanter de façon définitive (étape 2 du procédé décrit en figure 1), afin de ne pas être perturbés dans la suite du procédé par leurs propriétés magnétiques.

A l'issue de ce traitement thermique, les échantillons ont été broyés de manière à obtenir une granulométrie inférieure à 2 mm.

Le refus au tamisage, c'est-à-dire les particules dont la granulométrie était supérieure à la granulométrie recherchée ont été soumises à une deuxième étape de broyage (étape 4). Ce broyage en deux étapes est un broyage ménagé.

Les étapes 3 et 4 de la Figure 1 ont été effectuées en utilisant un broyeur de type déchiqueteur (broyeur à couteaux RETSCH de type SM100 - de Retsch GmbH, Retsch-Allee 1-5, 42781 Haan, Allemagne) avec un tamis de 2 mm. Les particules d'une taille supérieure ou égale à 2 mm ont alors subi une seconde étape de broyage en utilisant le même broyeur avec un tamis de 2 mm. A chacune des étapes 3 et 4, la poudre a été automatiquement classifiée sur le tamis de 2 mm, résultant en une poudre telle que 100 % des particules avaient une taille inférieure à 2 mm (quartile 10 ou d100).

Par la suite, un échantillon de 15 g de poudre d'aimants résultant de ce traitement, a été dispersé dans 100 ml d'une solution d'acide acétique dilué à 10 % pour être soumis à une étape d'attaque acide, ou lixiviation (étape 5). Le mélange a été laissé sous agitation pendant une période de 24h, à une température de 30°C, sous atmosphère d'air (ambiant) statique. Une étude cinétique de la dissolution des terres rares, du fer et du nickel, a été menée. Des échantillons de la solution d'attaque acide ont été prélevés durant la réaction aux temps suivants : 5min, 15 min, 30 min, 1h, 3h, 4h, 5h, 6h et 7h. Ces échantillons ont été soumis à une centrifugation à 3500 tr/min pendant 10 minutes. Le surnageant a ensuite été filtré sur filtre seringue 0,22 µm (étape 6), de façon à séparer la phase solide de la phase liquide. Les solutions métalliques obtenues ont ensuite été soumises à une analyse par absorption atomique, afin de déterminer la concentration des différents métaux dissous.

Les résultats des analyses par absorption atomique de la concentration en Fe, en Ni, en Nd et en Dy des solutions issues des attaques acides des différents échantillons prélevés sont illustrés dans la figure 3.

Cette étude cinétique montre que la dissolution des terres rares dans un acide faible dilué de type acide acétique est quasi-totale après 420 minutes de traitement. Dans le cas du nickel qui constitue le revêtement de l'aimant, la dissolution reste très limitée.

A l'issue de l'étape de solubilisation acide par l'acide acétique, le fer a été précipité. Cette précipitation a été effectuée par la mise en présence de la solution avec de l'oxygène qui est introduit dans la solution par bullage d'air. Afin de favoriser l'oxydation du fer du degré d'oxydation 2 au degré 3 et ainsi provoquer la précipitation de composés oxydes ou oxy-hydroxyde de fer, le pH a été ajusté à un pH allant de 3 à 4 par apport d'une quantité d'acide acétique supplémentaire, afin de précipiter sélectivement le fer III sans précipiter les terres rares. La mesure du pH a été réalisée à l'aide d'un pHmètre de marque Heito et de modèle P 310, associé à une électrode Heito.

### Exemples 3 et 4

Une poudre d'aimant identique à celle utilisée à l'exemple 2 a été traitée selon les mêmes modalités qu'à l'exemple 2, hormis que l'étape de traitement acide a été effectuée sous azote et que la séparation du fer des terres rares ne s'est pas faite par la mise en présence d'oxygène. Les solutions métalliques riches en terres rares obtenues après dissolution par attaque acide ont été traitées par des matériaux d'origine biologique qui permettent d'optimiser la séparation des terres rares et du fer.

### Exemple 3

2,5 g de poudre obtenue par broyage à l'aide d'un broyeur à mâchoires de fragments d'écorce de pin maritime de 20 à 40 mm de longueur commercialisés par la société Castorama et de marque Verve (société Kingfisher, 3 Sheldon Square, Paddington London W2 6PX), qui a été tamisée à 1,25 mm, ont été mélangés à 50 ml de solution contenant le fer et les terres rares obtenues après 420 minutes de réaction. La suspension de poudre dans la solution acide de terres rares ainsi obtenue a été maintenue en agitation permanente à l'aide d'un agitateur va et vient, à 30°C pendant 24h.

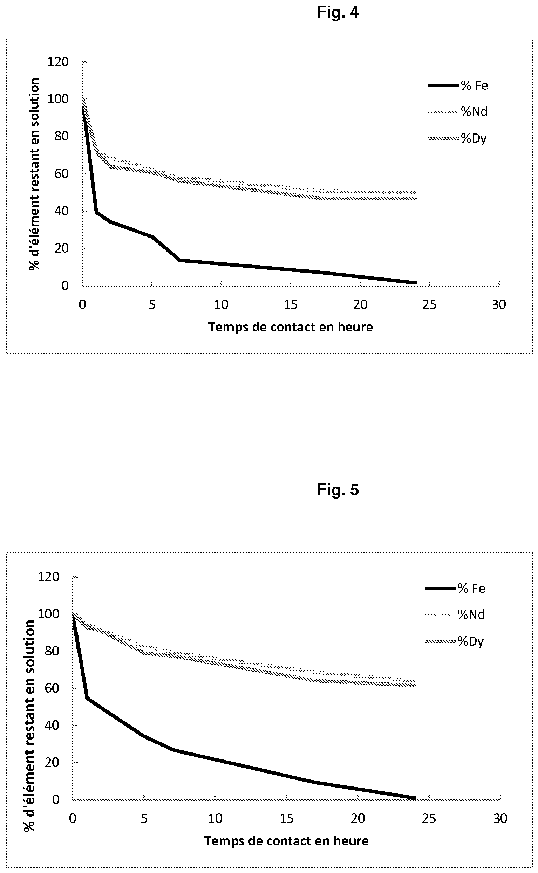

Les résultats de l'analyse par absorption atomique des concentrations en Fe, Nd et Dy présentes dans les prélèvements successifs réalisés au cours du temps pendant cette étape de précipitation sont présentés à la Figure 4. Cette figure montre que le fer (courbe basse), le Nd (courbe supérieure) et le Dy (courbe intermédiaire) sont fixés par la poudre d'écorce dans des proportions différentes les unes des autres. Le fer est soustrait à la solution dans sa totalité, tandis que moins de 50% des terres rares le sont. Ce procédé permet de capturer, et donc de séparer plus particulièrement le Fe" de la solution. Ce procédé permet donc d'extraire le fer de la solution et de garder une partie importante des terres rares en solution.

### Exemple 4

2,5 g de poudre de coquilles d'huitres de Marenne Oléron (indication géographique protégée - IGP) issues de la consommation alimentaire et obtenue par broyage à l'aide d'un broyeur à mâchoires, qui a été tamisée à 1,25 mm, ont été mélangés à 50 ml de solution contenant le fer et les terres rares obtenues. La suspension de poudre dans la solution acide de terres rares ainsi obtenue est maintenue en agitation permanente à l'aide d'un agitateur va et vient, à 30°C pendant 24h.

Les résultats de l'analyse par absorption atomique des concentrations en Fe, Nd et Dy présentes dans les prélèvements successifs réalisés au cours du temps pendant cette étape de précipitation sont présentés à la Figure 5. Cette figure montre que le fer (courbe basse), le Nd (courbe supérieure) et le Dy (courbe intermédiaire) sont fixés par la poudre de coquille d'huître dans des proportions différentes les unes des autres. Le fer est soustrait à la solution (précipité) dans sa totalité, tandis que moins de 35% des terres rares le sont. Ce procédé permet de capturer, et donc de séparer plus particulièrement le Fe" de la solution. Ce procédé permet donc d'extraire le fer de la solution et de garder une partie importante des terres rares en solution.

L'invention n'est pas limitée aux modes de réalisation présentés et d'autres modes de réalisation apparaîtront clairement à l'homme du métier.

## Revendications

1. Procédé d'extraction de terres rares contenues dans un aimant permanent, plus particulièrement de type NdFeB, additionné ou pas de terres rares, comprenant les étapes de :
a) traitement thermique de l'aimant permanent à une température supérieure ou égale à sa température de Curie,
b) broyage de l'aimant issu de l'étape de traitement thermique, les particules issues du broyage étant classifiées pour sélectionner les particules présentant pour 80 à 90 % d'entre elles une taille inférieure à 2 mm,
c) traitement sous agitation des particules sélectionnées à l'issue de l'étape de broyage par une solution contenant un acide organique,
d) séparation d'une phase liquide d'une éventuelle phase solide à l'issue du traitement par la solution contenant l'acide,
e) séparation du fer.

2. Procédé selon la revendication précédente, les particules d'aimant issues du broyage ayant une taille inférieure à 2 mm pour 80 % d'entre elles, et préférentiellement pour 90 % d'entre elles.

3. Procédé selon l'une quelconque des revendications précédentes, l'acide organique étant de l'acide acétique, de l'acide oxalique ou de l'acide citrique, ou un mélange de ceux-ci.

4. Procédé selon l'une quelconque des revendications précédentes, la solution d'acide étant à une concentration allant de 5 à 30 % en volume, et par exemple à une concentration de 10 %.

5. Procédé selon l'une quelconque des revendications précédentes, le traitement par une solution contenant l'acide étant effectué pendant une durée minimum de 1 heure, préférentiellement inférieure à 24 heures, plus préférentiellement allant de 100 à 420 minutes, par exemple d'environ 420 minutes.

6. Procédé selon la revendication 1, le fer étant séparé par précipitation.

7. Procédé selon la revendication précédente, le fer étant précipité par introduction d'oxygène, par exemple par bullage ou brassage d'un gaz contenant de l'oxygène, tel que de l'air, ou de l'oxygène pur.

8. Procédé selon la revendication 1, le fer étant séparé par mise en contact avec au moins un matériau d'origine biologique.

9. Procédé selon la revendication précédente, dans lequel le matériau d'origine biologique est de la poudre de coquilles d'huître.

10. Procédé selon la revendication 8, dans lequel le matériau d'origine biologique est de la poudre d'écorces de pin.

11. Procédé de recyclage incorporant un procédé d'extraction selon l'une quelconque des revendications précédentes, dans lequel l'aimant permanent provient de déchets industriels.

## Patentansprüche

1. Verfahren zur Extraktion von Seltenen Erden, die in einem Permanentmagneten, insbesondere vom Typ NdFeB, mit oder ohne Zusatz von Seltenen Erden enthalten sind, mit den folgenden Schritten:
a) Wärmebehandeln des Permanentmagneten bei einer Temperatur, die größer oder gleich seiner Curie-Temperatur ist,
b) Zerkleinern des Magneten aus dem Schritt des Wärmebehandelns, wobei die aus dem Zerkleinern stammenden Partikel klassifiziert werden, um die Partikel auszuwählen, die zu 80 bis 90 % eine Größe von weniger als 2 mm aufweisen,
c) Behandeln der am Ende des Schritts des Zerkleinerns ausgewählten Partikel unter Rühren mit einer Lösung, die eine organische Säure enthält,
d) Abtrennen einer flüssigen Phase von einer eventuellen festen Phase am Ende des Behandelns mit der säurehaltigen Lösung,
e) Abtrennen des Eisens.

2. Verfahren nach dem vorhergehenden Anspruch, wobei die Magnetpartikel aus dem Zerkleinern zu 80 % und vorzugsweise zu 90 % eine Größe von weniger als 2 mm aufweisen.

3. Verfahren nach einem der vorhergehenden Ansprüche, wobei die organische Säure Essigsäure, Oxalsäure oder Zitronensäure oder eine Mischung davon ist.

4. Verfahren nach einem der vorhergehenden Ansprüche, wobei die Säurelösung eine Konzentration von 5 bis 30 Vol.-% und z. B. eine Konzentration von 10 % aufweist.

5. Verfahren nach einem der vorhergehenden Ansprüche, wobei das Behandeln mit einer die Säure enthaltenden Lösung für eine Dauer von mindestens 1 Stunde, vorzugsweise weniger als 24 Stunden, besonders bevorzugt von 100 bis 420 Minuten, z. B. etwa 420 Minuten, durchgeführt wird.

6. Verfahren nach Anspruch 1, wobei das Eisen durch Ausfällung abgetrennt wird.

7. Verfahren nach dem vorhergehenden Anspruch, wobei das Eisen durch Einleiten von Sauerstoff ausgefällt wird, z. B. durch Blasen oder Rühren eines sauerstoffhaltigen Gases, wie Luft, oder reiner Sauerstoff.

8. Verfahren nach Anspruch 1, wobei das Eisen abgetrennt wird, indem es mit mindestens einem Material biologischen Ursprungs in Kontakt gebracht wird.

9. Verfahren nach dem vorhergehenden Anspruch, wobei es sich bei dem Material biologischen Ursprungs um Austernschalenpulver handelt.

10. Verfahren nach Anspruch 8, wobei es sich bei dem Material biologischen Ursprungs um Kiefernrindenpulver handelt.

11. Recyclingverfahren, das ein Extraktionsverfahren nach einem der vorhergehenden Ansprüche beinhaltet, wobei der Permanentmagnet aus Industrieabfällen stammt.

## Claims

1. A process for extracting rare-earth elements contained in a permanent magnet, more particularly of NdFeB type, optionally to which rare-earth elements have been added, comprising the steps of:
a) heat treating the permanent magnet at a temperature greater than or equal to the Curie temperature thereof,
b) grinding of the magnet resulting from the heat treatment step, the particles resulting from the grinding being classified in order to select the particles having, for 80% to 90% thereof, a size of less than 2 mm,
c) treating, with stirring, the particles selected at the end of the grinding step with a solution containing an organic acid,
d) separating a liquid phase from an optional solid phase at the end of the treatment with the solution containing the acid,
e) separating the iron.

2. The process as claimed in the preceding claim, the magnet particles resulting from the grinding having a size of less than 2 mm for 80% thereof, and preferentially for 90% thereof.

3. The process as claimed in either one of the preceding claims, the organic acid being acetic acid, oxalic acid or citric acid, or a mixture thereof.

4. The process as claimed in any one of the preceding claims, the acid solution being at a concentration ranging from 5% to 30% by volume, and for example at a concentration of 10%.

5. The process as claimed in any one of the preceding claims, the treatment with a solution containing the acid being carried out for a minimum duration of 1 hour, preferentially less than 24 hours, more preferentially ranging from 100 to 420 minutes, for example around 420 minutes.

6. The process as claimed in claim 1, the iron being separated by precipitation.

7. The process as claimed in the preceding claim, the iron being precipitated via the introduction of oxygen, for example by bubbling or mixing of an oxygen-containing gas, such as air, or pure oxygen,

8. The process as claimed in claim 1, the iron being separated by being brought into contact with at least one material of biological origin.

9. The process as claimed in the preceding claim, wherein the material of biological origin is oyster shell powder.

10. The process as claimed in claim 8, wherein the material of biological origin is pine bark powder.

11. A recycling process incorporating an extraction process as claimed in any one of the preceding claims, wherein the permanent magnet originates from industrial waste.
